# EUROPÄISCHE PATENTANMELDUNG

(11) **EP 0 840 021 A1**
(43) Veröffentlichungstag der Anmeldung: **06.05.1998**
(21) Anmeldenummer: 96117678.1
(22) Anmeldetag: 05.11.1996
(51) Int. Cl.: F16B 5/02

(54) **Vorrichtung zum Verbinden von Bauteilen**

(71) Anmelder: Schwarzbich, Jörg, D-33615 Bielefeld (DE)
(72) Erfinder: Schwarzbich, Jörg, D-33615 Bielefeld (DE)
(74) Vertreter: TER MEER STEINMEISTER & PARTNER GbR

(57) **Zusammenfassung**

Vorrichtung zum Verbinden von Bauteilen (10, 12), mit einer Verbindungsschraube (16) und zwei die Verbindungsschraube umgebenden, gegeneinander verdrehbaren Distanzringen (26, 28), die sich in Axialrichtung über schraubenförmige Steigungsflächen (32) aneinander abstützen und von denen einer (26) durch die Verbindungsschraube (16) drehantreibbar ist, dadurch gekennzeichnet, daß für den Drehantrieb des Distanzrings (26) ein Planetengetriebe (20, 26, 28, 40) vorgesehen ist.

## Beschreibung

Die Erfindung betrifft eine Vorrichtung zum Verbinden von Bauteilen, mit einer Verbindungsschraube und zwei die Verbindungsschraube umgebenden, gegeneinander verdrehbaren Distanzringen, die sich in Axialrichtung über schraubenförmige Steigungsflächen aneinander abstützen und von denen einer durch die Verbindungsschraube drehantreibbar ist.

Solche Vorrichtungen dienen dazu, zwei Bauteile mit Abstand zueinander zu verbinden. Die beiden Distanzringe dienen dabei als einstellbarer Abstandshalter. Vorzugsweise ist der Schraubensinn der Steigungsflächen so gewählt, daß das Axialmaß des Abstandshalters zunimmt, wenn die Verbindungsschraube in eines der beiden Bauteile eingeschraubt wird und dabei den drehbaren Distanzring antreibt. Auf diese Weise ist es möglich, die beiden Bauteile und die dazwischen eingefügten Distanzringe mit Hilfe der Verbindungsschraube fest miteinander zu verspannen.

In EP 0 176 663 B1 wird eine Vorrichtung der oben genannten Art beschrieben, bei der der drehantreibbare Distanzring Verbindung zur Mantelfläche der Verbindungsschraube hat und durch die Drehung dieser Verbindungsschraube mitgeschleppt wird. Diese Lösung hat den Vorteil, daß für den Drehantrieb des Distanzrings keine zusätzlichen Mittel benötigt werden. Die Verbindung zwischen der Mantelfläche der Verbindungsschraube und dem Distanzring erfolgt entweder durch Reibschluß oder mittels eines auflösbaren Formschlusses, beispielsweise durch einen in die Verbindungsschraube und in die Innenfläche des Distanzringes eingreifenden Keils, der nach Erreichen der vorgesehenen Bauteilabstands beim weiteren Anziehen der Verbindungsschraube abgeschert wird.

Wenn die schraubenförmigen Steigungsflächen nur an den einander zugewandten Stirnseiten der Distanzringe ausgebildet sind, werden zusätzliche Mittel benötigt, um die beiden Distanzringe in Axialrichtung zusammenzuhalten. Außerdem ist in diesem Fall die entsprechende Bearbeitung der schraubenförmigen Steigungsflächen relativ aufwendig und kostspielig. Vor diesem Hintergrund ist es vorteilhaft, die Steigungsflächen an den Distanzringen als ineinandergreifende Innen- und Außengewinde auszubilden. In diesem Fall muß jedoch beim Verdrehen der Distanzringe ein größerer Reibungswiderstand überwunden werden.

Wenn die Verbindung zwischen dem Mantel der Verbindungsschraube und dem drehantreibbaren Distanzring durch Reibschluß erfolgt, ist zur Erzielung des gewünschten Drehmoments und des entsprechenden Reibschlusses eine hohe Klemmkraft erforderlich. Dies hat den Nachteil, daß es zu einer Beschädigung am Gewinde der Verbindungsschraube kommen kann. Ein weiterer Nachteil besteht darin, daß schon beim Eindrücken oder Eindrehen der Verbindungsschraube in den drehantreibbaren Distanzring ein verhältnismäßig großer Widerstand überwunden werden muß und es deshalb schwer zu erkennen ist, ob die Verbindungsschraube in dem zu verbindenden Bauteil gefaßt hat.

Andererseits hat die Verbindung mittels auflösbaren Formschlusses den Nachteil, daß die gewünschte Verbindung zwischen der Schraube und dem Distanzring nur bei Erstgebrauch der Vorrichtung besteht, so daß bei einem nachträglichen Lösen und Wiederherstellen der Verbindung keine einwandfreie Funktion der Vorrichtung mehr gewährleistet ist.

Weiterhin sind bei der bekannten Vorrichtung die konstruktiven Gestaltungsmöglichkeiten dadurch begrenzt, daß die Antriebsrichtung des Distanzrings aufgrund der mitschleppenden Verbindung stets mit der Drehrichtung der Verbindungsschraube übereinstimmen muß.

Aufgabe der Erfindung ist es, eine Vorrichtung der eingangs genannten Art zu schaffen, die auch bei mehrmaligem Gebrauch funktionsfähig bleibt und es gestattet, den Distanzring zuverlässig in der gewünschten Weise anzutreiben.

Diese Aufgabe wird erfindungsgemäß dadurch gelöst, daß für den Drehantrieb des Distanzrings ein Planetengetriebe vorgesehen ist.

Die Erfindung gestattet es somit, den drehbaren Distanzring mit Hilfe des Planetengetriebes mit einem von 1:1 verschiedenen Übersetzungsverhältnis anzutreiben. Beispielsweise läßt sich durch eine Übersetzung ins Langsame ein hohes Antriebsdrehmoment für den Distanzring erreichen, ohne daß auf der Eingangsseite des Planetengetriebes, also an der Verbindungsschraube, übermäßig hohe Kräfte auftreten. Zugleich wird so eine äußerst feinfühlige Einstellung des durch die Verdrehung der beiden Distanzringe bestimmten Axialmaßes erreicht. Das Übersetzungsverhältnis wird durch die jeweilige Auslegung des Planetengetriebes bestimmt. Dabei kann je nach Anwendungsfall auch eine Übersetzung ins Schnelle oder eine Umkehr der Antriebsrichtung vorgesehen werden. Die Drehrichtung des Distanzringes bestimmt in Verbindung mit der Händigkeit der schraubenförmigen Steigungsflächen der Distanzringe die Richtung der Verstellung des Axialmaßes (Zunahme oder Abnahme). Die Drehrichtung der Verbindungsschraube beim Einschrauben ist von der axialen Einschraubrichtung und von der Händigkeit dieser Schraube abhängig. Durch die Möglichkeit, mit Hilfe des Planetengetriebes die Antriebsrichtung umzukehren, läßt sich gewünschtenfalls der Einsatz von Linksgewinden vermeiden.

Vorteilhafte Weiterbildungen der Erfindung ergeben sich aus den Unteransprüchen.

Ein besonders einfacher Aufbau des Planetengetriebes und eine entsprechend kostengünstige Fertigung läßt sich dadurch erreichen, daß die Verbindungsschraube das Sonnenrad und je einer der beiden Distanzringe den Planetenträger und das Hohlrad des Planetengetriebes bildet. Die Planetenräder sind bevorzugt als Wälzkörper (Kugeln oder Rollen) ausgebildet, die in einer käfigartigen Struktur des Planetenträgers gehalten sind und reibschlüssig an der Außenfläche des Sonnenrades und der Innenfläche des Hohlrades abrollen. Besonders zweckmäßig ist die Verwendung von Wälzkörpern aus gummielastischem Material. Hierdurch wird bei verhältnismäßig geringem Eindrück- oder Einschraubwiderstand der Verbindungsschraube ein hoher Reibschluß erreicht. Die Wälzkörper können unmittelbar am Gewinde der Verbindungsschraube und gegebenenfalls auch an einem Innengewinde des als Hohlrad dienenden Distanzringes abrollen, das die Steigungsflächen dieses Distanzringes bildet.

Im folgenden werden bevorzugte Ausführungsbeispiele anhand der Zeichnung näher erläutert.

Es zeigen:
- Fig. 1: einen Längsschnitt durch zwei zu verbindende Bauteile und die Verbindungsvorrichtung;
- Fig. 2: die Verbindungsvorrichtung nach Figur 1 unmittelbar vor Erreichen der Verbindungsposition;
- Fig. 3: einen Schnitt längs der Linie III-III in Figur 1; und
- Fig. 4: eine Schnittdarstellung entsprechend Figur 1 für eine andere Ausführungsform der Erfindung.

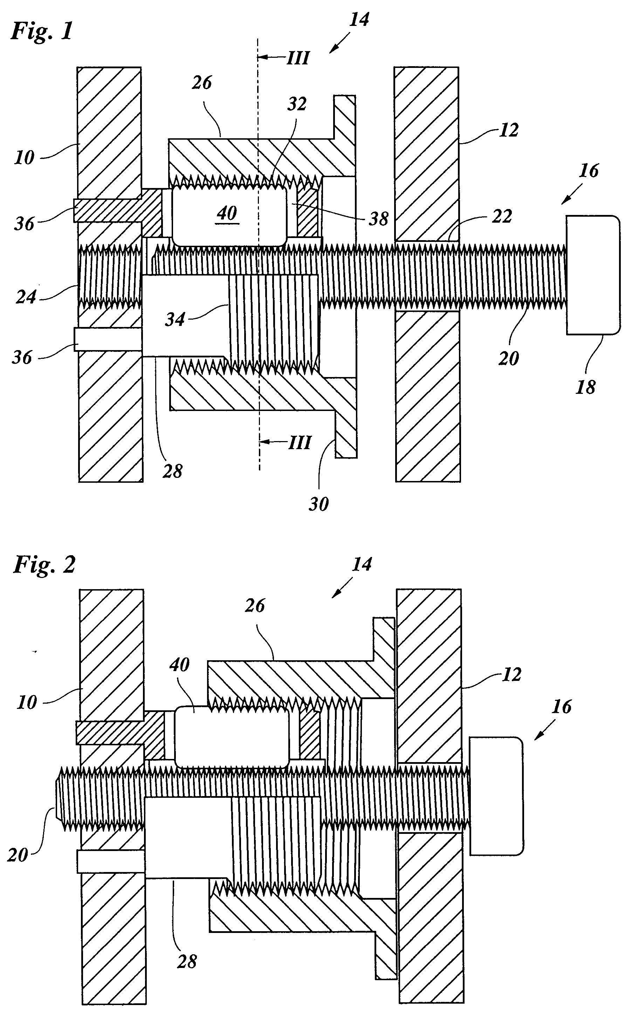

Figur 1 zeigt als Beispiel zwei plattenförmige Bauteile 10, 12, die durch eine Verbindungsvorrichtung 14 so miteinander zu verbinden sind, daß zwischen ihnen ein bestimmter Abstand eingehalten wird. Die Verbindungsvorrichtung umfaßt eine Verbindungsschraube 16 mit einem Kopf 18 und einem Gewindeschaft 20, der im gezeigten Beispiel ein Maschinengewinde hat. Der Gewindeschaft 20 ist durch eine Bohrung 22 des Bauteils 12 hindurchgesteckt und in eine Gewindebohrung 24 des anderen Bauteils 10 einschraubbar.

Weiterhin umfaßt die Verbindungsvorrichtung 14 zwei Distanzringe 26, 28, die den Gewindeschaft 20 in dem Zwischenraum zwischen den Bauteilen 10 und 12 umgeben. Der Distanzring 26 weist einen Stützflansch 30 zur Abstützung des Bauteils 12 auf und ist mit einem Innengewinde 32 (Rechtsgewinde) versehen, das mit einem Außengewinde 34 des anderen Distanzrings 28 in Eingriff steht. Der Distanzring 28 ist auf irgendeine bekannte Weise lösbar und drehfest an dem Bauteil 10 gehalten, was im gezeigten Beispiel durch in das Bauteil 10 eingreifende Einsteckzapfen 36 symbolisiert wird. Wahlweise könnte der Distanzring 28 auch in einem Stück mit dem Bauteil 10 ausgebildet sein.

In einem innerhalb des Distanzrings 26 gelegenen Teil bildet der Distanzring 28 einen Käfig mit Aussparungen 38. Jede dieser Aussparungen 38 nimmt einen Wälzkörper 40 beispielsweise in der Form einer zylindrischen Rolle auf, der am Außengewinde des Gewindeschaftes 20 und am Innengewinde 32 des Distanzrings 26 abrollt. Der Wälzkörper 40 besteht vorzugsweise aus gummielastischem Material, das sich etwas in die Gewindenuten eindrücken kann, so daß ein fester Reibschluß zwischen den aneinander abwälzenden Körpern erzielt wird.

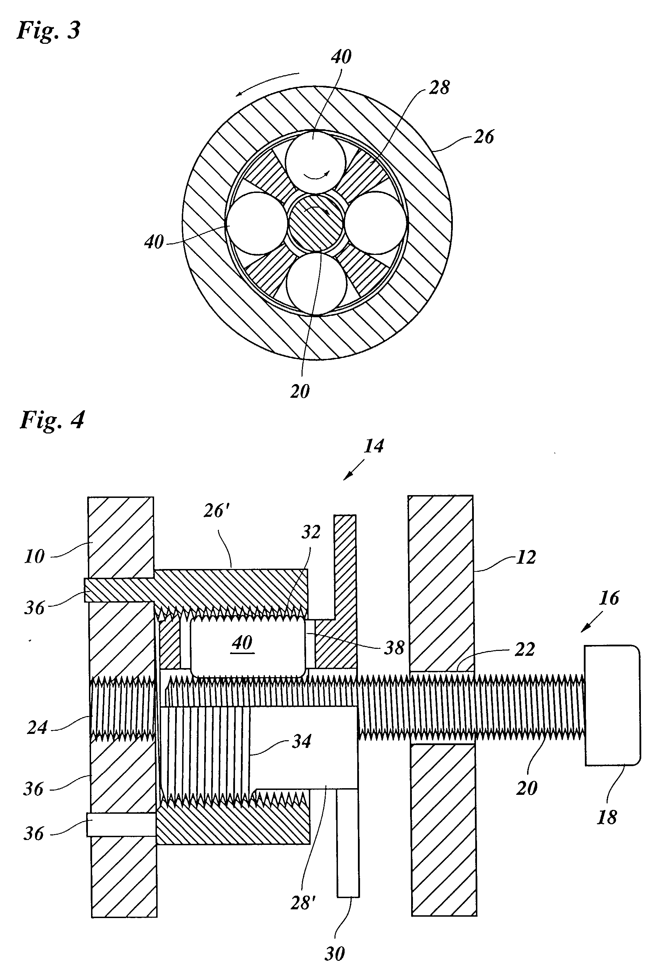

Wie in Figur 3 zu erkennen ist, sind insgesamt vier Wälzkörper 40 gleichmäßig auf dem Umfang des Distanzrings 28 verteilt.

Die Verbindungsschraube 16, die Distanzringe 26, 28 und die Wälzkörper 40 bilden zusammen ein Planetengetriebe mit dem Gewindeschaft 20 der Verbindungsschraube als Sonnenrad, dem Distanzring 26 als Hohlrad und dem Distanzring 28 als Planetenträger. Die beiden Distanzringe 26, 28 und die eingelegten Wälzkörper 40 bilden zusammen eine als eine Einheit handhabbares Baugruppe. Da sich die Aussparungen 38 radial nach innen verjüngen, werden die Wälzkörper 40 auch dann formschlüssig in Position gehalten, wenn die Verbindungsschraube 16 nicht eingesteckt ist.

Vor dem Zusammenbau der zu verbindenden Bauteile 10, 12 wird die durch die Distanzringe 26, 28 gebildete Baugruppe in dem in Figur 1 gezeigten Zustand an dem Bauteil 10 befestigt. Anschließend wird das Bauteil 12 angelegt, und die Verbindungsschraube 16 wird durch die Bohrung 22 hindurch kraftschlüssig in den Zwischenraum zwischen den Wälzkörpern 40 eingesteckt oder eingedreht. Wenn die Verbindungsschraube 16 im Uhrzeigersinn gedreht wird (Figur 3), so drehen sich die Wälzkörper 40 in Gegenuhrzeigersinn, während sie durch den Distanzring 28 an einem Umlauf um den Gewindeschaft 20 herum gehindert werden. Durch den Reibschluß zwischen den Wälzkörpern 40 und dem Innengewinde 32 des Distanzrings 26 wird folglich der Distanzring 26 im Gegenuhrzeigersinn angetrieben. Aufgrund des Gewindeeingriffs mit dem Distanzring 28 bewegt sich daher der Distanzring 26 auf das Bauteil 12 zu (nach rechts in Figur 1).

Das an den Wälzkörpern 40 abwälzende Innengewinde 32 des Distanzrings 26 hat dem Betrage nach dieselbe Umfangsgeschwindigkeit wie der Mantel des Gewindeschaftes 20. Da jedoch der Innendurchmesser des Distanzrings 26 größer ist als der Außendurchmesser des Gewindeschaftes 20, ist die Winkelgeschwindigkeit des Distanzrings entsprechend kleiner. Bei der Übertragung des Drehmoments mit Hilfe des Planetengetriebes von der Verbindungsschraube 16 auf den Distanzring 26 ist somit das Übersetzungsverhältnis kleiner als 1, und folglich ist das auf den Distanzring 26 übertragene Antriebsdrehmoment größer als das Drehmoment, das auf die Verbindungsschraube 16 ausgeübt und durch Reibschluß auf die Wälzkörper 40 übertragen wird. Der durch die relativ glatten Wände der Aussparungen 38 auf die Wälzkörper ausgeübte Reibungswiderstand kann dabei mühelos überwunden werden, da der Reibschluß zwischen den Wälzkörpern und den relativ rauhen Gewindeoberflächen wesentlich größer ist, zumal die Wälzkörper durch den Gewindeschaft 20 auch noch etwas in Radialrichtung komprimiert werden. Insgesamt läßt sich so trotz der reibschlüssigen Verbindung zwischen dem Gewindeschaft 20 und den Wälzkörpern 40 ein hohes Antriebsdrehmoment auf den Distanzring 26 ausüben, so daß der Distanzring 26 seinerseits eine hohe Axialkraft auf das Bauteil 12 ausüben kann.

Durch die gummielastischen Wälzkörper 40 erhält der Gewindeschaft 20 eine gute Axialführung, so daß er sich sauber in die Gewindebohrung 24 des Bauteils 10 einführen läßt. Schon während der axialen Verstellung des Distanzrings 26 kann die Verbindungsschraube 16 in die Gewindebohrung 24 des Bauteils 10 eingeschraubt werden. Die mit Hilfe des Planetengetriebes erreichte Übersetzung gewährleistet dabei ein günstiges Verhältnis zwischen der Einschraubtiefe der Verbindungsschraube und dem axialen Verstellweg des Distanzrings 26.

Wenn der Distanzring 26 mit seinem Stützflansch 30 an dem Bauteil 12 anschlägt und von dem Bauteil 12 ein Gegendruck ausgeübt wird, spätestens dann, wenn der Kopf 18 an dem Bauteil 12 anliegt, so wird der Distanzring 26 fest in das Bauteil 12 gespannt, bis seine Drehung zum Stillstand kommt und der Gewindeschaft 20 an den Wälzkörpern 40 durchrutscht. Dieser Zustand ist in Figur 2 dargestellt. Die Verbindungsschraube 16 läßt sich weiter anziehen, so daß das Bauteil 12 fest zwischen dem Distanzring 26 und dem Kopf 18 eingespannt wird, während der einmal eingestellte Abstand zu dem Bauteil 10 erhalten bleibt.

Durch Drehung der Verbindungsschraube 16 im Gegenuhrzeigersinn läßt sich die Verbindung beschädigungsfrei wieder lösen. Der Distanzring 26 bewegt sich dabei zurück in die in Figur 1 gezeigte Position. Falls er seine Endlage erreicht, bevor die Verbindungsschraube 16 aus der Gewindebohrung 24 herausgeschraubt ist, wirken die Wälzkörper 40 wieder als Rutschkupplung, die das endgültige Herausschrauben der Verbindungsschraube 16 gestatten.

Beim Einschrauben der Verbindungsschraube 16 in den Zwischenraum zwischen den Wälzkörpern 40 ergibt sich praktisch keine Beschädigung der gummielastischen Wälzkörper 40, so daß der Befestigungs- und Lösevorgang vielfach wiederholt werden kann.

Das Einschrauben der Verbindungsschraube 16 zunächst in den Zwischenraum zwischen den Wälzkörpern 40 und dann in die Gewindebohrung 24 läßt sich in rationeller Weise mit einem elektrischen Schrauber durchführen. Der dabei insgesamt von dem Distanzring 26 zurückgelegte axiale Verstellweg ist durch die Länge des Gewindeschaftes 20 und die Anfangsposition des Distanzrings 26 bestimmt. Somit läßt sich der gewünschte Abstand zwischen den Bauteilen 10 und 12 in der Verbindungsposition präzise einstellen, indem die Anfangsposition des Distanzrings 26 auf dem Distanzring 28 geeignet gewählt wird. Diese Anfangsposition kann dadurch definiert sein, daß der Distanzring bündig an dem Bauteil 10 anliegt. Sie läßt sich jedoch wahlweise auch dadurch reproduzierbar einstellen, daß in bekannter Weise an dem Distanzring 26, etwa an dessen Stützflansch 30, ein radialer Vorsprung angebracht wird, der bei Erreichen der gewünschten Axialposition an einem axial von dem Bauteil 10 oder einem entsprechenden Teil des Distanzrings 28 vorspringenden Zapfen anschlägt (nicht gezeigt).

Figur 4 zeigt ein abgewandeltes Ausführungsbeispiel, das sich von dem vorherigen Ausführungsbeispiel dadurch unterscheidet, daß der Distanzring 26', der das Hohlrad des Planetengetriebes bildet, mit Hilfe der Zapfen 36 drehfest an dem Bauteil 10 gehalten ist, während der den Planetenträger bildende Distanzring 28' drehantreibbar ist. Der Stützflansch 30 ist in diesem Fall an dem Distanzring 28' ausgebildet. Das Gewinde 32 des Distanzrings 26' und das entsprechende Gegengewinde 34 des Distanzrings 28' sind als Linksgewinde ausgebildet, während die Verbindungsschraube 16 nach wie vor ein Rechtsgewinde hat. Beim Einschrauben der Verbindungsschraube 16 wälzen die Wälzkörper 40 am Umfang des Gewindeschaftes 20 und an dem Gewinde 32 des starren Distanzrings 26' ab, so daß der drehbare Distanzring 28' mit verminderter Drehzahl im Uhrzeigersinn angetrieben wird (in Einschraubrichtung der Verbindungsschrauben 16 gesehen). Aufgrund des Linksgewindes schraubt sich so somit der Distanzring 28' weiter aus dem Distanzring 26' hinaus, so daß er sich wieder im Sinne einer Vergrößerung des Axialmaßes auf das Bauteil 12 zubewegt.

Während bei den Ausführungsbeispielen nach Figuren 1 und 4 die Verbindungsschraube 16 jeweils von rechts in der Zeichnung in das Bauteil 10 eingeschraubt wird, ist es auch möglich, die Verbindungsschraube von links in das Bauteil 12 einzuschrauben. Wenn sich auch indiesen Fällen der Distanzring 26 bzw. 28' auf das Bauteil 12 zubewegen soll, müssen die Gewinde 32, 34 im Fall der Figur 1 als Linksgewinde und im Fall der Figur 4 als Rechtsgewinde ausgebildet sein.

Als weitere Abwandlung ist es denkbar, den jeweils nicht drehbaren Distanzring drehfest an dem Bauteil 12 zu arretieren das mit der glatten Bohrung 22 für die Verbindungsschraube versehen ist.

Während bei den zuvor beschriebenen Ausführungsbeispielen der Planetenträger des Planetengetriebes unmittelbar durch einen der beiden Distanzringe gebildet wird, ist es in einer abgewandelten Ausführungsform der Erfindung auch möglich, den Planetenträger als separates Bauteil auszubilden. Dies hat den Vorteil, daß der mit den Aussparungen 38 versehene Planetenträger kostengünstig aus Kunststoff gespritzt werden kann, während die mit den Steigungsflächen oder Gewinden versehenen Distanzringe aus Metall hergestellt werden. Der separat hergestellte Planetenträger kann drehfest mit einem der beiden Distanzringe oder unabhängig von den Distanzringen drehfest mit einem der Bauteile 10, 12 verbunden sein. Beispielsweise wäre des denkbar, die Ausführungsform nach Figur 1 so abzuwandeln, daß bei dem Distanzring 26 das Innengewinde 32 fortgelassen wird, so daß die Wälzkörper 40 an der glatten Innenfläche dieses Distanzringes abrollen. Das Bauteil 28 wäre dann nicht mit dem Außengewinde 34 versehen und würde lediglich als Planetenträger dienen. Der Distanzring 26 wäre beispielsweise mit einem Außengewinde in das Innengewinde eines (nicht gezeigten) in bezug auf das Bauteil 10 drehfesten Distanzrings eingeschraubt.

## Patentansprüche

1. Vorrichtung zum Verbinden von Bauteilen (10, 12), mit einer Verbindungsschraube (16) und zwei die Verbindungsschraube umgebenden, gegeneinander verdrehbaren Distanzringen (26, 28; 26', 28'), die sich in Axialrichtung über schraubenförmige Steigungsflächen (32, 34) aneinander abstützen und von denen einer (26; 28') durch die Verbindungsschraube (16) drehantreibbar ist, dadurch **gekennzeichnet**, daß für den Drehantrieb des Distanzrings (26; 28') ein Planetengetriebe (20, 26, 28, 40; 20, 26', 28', 40) vorgesehen ist.

2. Vorrichtung nach Anspruch 1, dadurch **gekennzeichnet**, daß die Verbindungsschraube (16) das Sonnenrad (20) des Planetengetriebes bildet, daß einer (26; 26') der Distanzringe das Hohlrad des Planetengetriebes bildet und daß der andere Distanzring (28; 28') den Planetenträger des Planetengetriebes bildet oder in bezug auf den Planetenträger drehfest gehalten ist.

3. Vorrichtung nach Anspruch 1 oder 2, dadurch **gekennzeichnet**, daß der Planetenträger als Käfig mit Aussparungen (38) ausgebildet ist, in denen Wälzkörper (40) als Planetenräder drehbar aufgenommen sind.

4. Vorrichtung nach Anspruch 3, dadurch **gekennzeichnet**, daß die Wälzkörper (40) aus elastisch komprimierbarem Material, vorzugsweise gummielastischem Material, bestehen.

5. Vorrichtung nach Anspruch 3 oder 4, dadurch **gekennzeichnet**, daß die Wälzkörper (40) am Gewinde des Gewindeschaftes (20) der Verbindungsschraube (16) abrollen.

6. Vorrichtung nach einem der vorstehenden Ansprüche, dadurch **gekennzeichnet**, daß die Steigungsflächen an den Distanzringen (26, 28; 26', 28') durch ein Innengewinde (32) an dem einen Distanzring (26; 26') und ein entsprechendes Außengewinde (34) an dem anderen Distanzring (28; 28') gebildet werden.

7. Vorrichtung nach den Ansprüchen 5 und 6, dadurch **gekennzeichnet**, daß die Wälzkörper (40) am Innengewinde (32) des das Hohlrad bildenden Distanzrings (26; 26') abrollen.

8. Vorrichtung nach einem der vorstehenden Ansprüche, dadurch **gekennzeichnet**, daß das Planetengetriebe den Distanzring (26) in dem Drehsinn antreibt, der dem Drehsinn der Verbindungsschraube (16) entgegengesetzt ist.

9. Vorrichtung nach den Ansprüchen 2 und 8, dadurch **gekennzeichnet**, daß der in bezug auf den Planetenträger drehfeste Distanzring (28) drehfest an einem (10) der zu verbindenden Bauteile gehalten ist und daß die Verbindungsschraube (16) in dieses Bauteil (10) einschraubbar ist.

10. Vorrichtung nach einem der Ansprüche 2 bis 7, dadurch **gekennzeichnet**, daß der das Hohlrad bildende Distanzring (26') drehfest an einem der Bauteile (10, 12) gehalten ist.
